# EUROPEAN PATENT SPECIFICATION

(11) **EP 3 007 266 B1**
(45) Date of publication and mention of the grant of the patent: **06.09.2017**
(21) Application number: 14187884.3
(22) Date of filing: 07.10.2014
(51) Int. Cl.: H01M 14/00

(54) **An apparatus and associated methods for electrical storage**
Vorrichtung und zugehörige Verfahren zur elektrischen Speicherung
Appareil et procédés associés de stockage électrique

(43) Date of publication of application: 13.04.2016
(73) Proprietor: Nokia Technologies OY, 02610 Espoo (FI)
(72) Inventor: Wei, Di, Cambridge, CB4 3TD (GB)
(74) Representative: Potter Clarkson LLP

(56) References cited:
- US-A1- 2011 183 180
- US-A1- 2012 026 643
- MIN-KYU SONG ET AL: "A Long-Life, High-Rate Lithium/Sulfur Cell: A Multifaceted Approach to Enhancing Cell Performance", NANO LETTERS, vol. 13, no. 12, 11 December 2013 (2013-12-11), pages 5891-5899, XP055167362, ISSN: 1530-6984, DOI: 10.1021/nl402793z

## Description

### Technical Field

The present disclosure relates to the field of electrical storage (including, for example, batteries, supercapacitors and battery-capacitor hybrids), associated methods and apparatus, and in particular concerns an apparatus comprising a graphene oxide electrode configured to generate protons in the presence of water to produce a potential difference, and an electrolyte comprising a room-temperature ionic fluid configured to absorb water from the surrounding environment and deliver said water to the electrode to facilitate the generation of protons. Certain disclosed example aspects/embodiments relate to portable electronic devices, in particular, so-called hand-portable electronic devices which may be hand-held in use (although they may be placed in a cradle in use). Such hand-portable electronic devices include so-called Personal Digital Assistants (PDAs), smartwatches and tablet PCs.

The portable electronic devices/apparatus according to one or more disclosed example aspects/embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Research is currently being done to develop smaller electrical storage cells having a greater storage capacity than existing storage cells for use in modern electronic devices.

US2012/0026643A1 describes a supercapacitor comprising two electrodes, a porous separator disposed between the two electrodes, and an ionic liquid electrolyte in physical contact with the two electrodes. At least one of the two electrodes comprises a meso-porous structure being formed of a plurality of nano graphene platelets and multiple pores having a pore size in the range of 2 nm and 25 nm. The graphene platelets are not spacer-modified or surface-modified platelets. The graphene platelets may be curved rather than flat-shaped. The pores are accessible to ionic liquid molecules enabling the formation of larger amounts of electric double layer charges resulting in a supercapacitor having a higher specific capacitance and energy density.

M-K. Song et al, Nano Lett., 13, No. 12, 5891 (2013) describes a Li/S cell employing a cetyltrimethyl ammonium bromide (CTAB)-modified sulfur-graphene oxide (S-GO) nanocomposite cathode. The Li/S can be discharged at rates as high as 6C (1C = 1.675 A/g of sulfur) and charged at rates as high as 3C while still maintaining high specific capacity (∼800 mA·h/g of sulfur at 6C) with a long cycle life exceeding 1500 cycles and an extremely low decay rate (0.039% per cycle). The initial estimated cell-level specific energy of the cell was ∼500 W·h/kg, which is higher than that of current Li-ion cells (∼200 W·h/kg). Even after 1500 cycles, the cell demonstrated a high specific capacity (∼740 mA·h/g of sulfur) which corresponds to ∼414 mA·h/g of electrode: still higher than state-of-the-art Li-ion cells. Moreover, these Li/S cells with lithium metal electrodes can be cycled with a Coulombic efficiency of 96.3% after 1500 cycles, which was enabled by the new formulation of the ionic liquid-based electrolyte.

US2011/0183180A1 describes a flexible, asymmetric electrochemical cell comprising: (A) A sheet of graphene paper as a first electrode comprising nano graphene platelets (NGP) having a platelet thickness less than 1 nm, wherein the first electrode has electrolyte-accessible pores; (B) A thin-film or paper-like first separator and electrolyte; and (C) A thin-film or paper-like second electrode which is different in composition than the first electrode; wherein the separator is sandwiched between the first and second electrodes to form a flexible laminate configuration. The asymmetric supercapacitor cell with different NGP-based electrodes exhibits a higher capacitance and specific energy, and a more stable and longer cycle life.

### Summary

The present invention comprises an apparatus, methods and computer program as defined in the claims.

According to a first aspect, there is provided an apparatus comprising a first electrode, a second electrode and an electrolyte,
the first electrode comprising graphene oxide and configured to generate protons in the presence of water to produce a potential difference between the first and second electrodes,
the electrolyte configured to enable the generated protons to flow from the first electrode to the second electrode when the first and second electrodes are connected by an external circuit,
wherein the electrolyte comprises a room-temperature ionic fluid configured to absorb water from the surrounding environment and deliver said water to the first electrode to facilitate the generation of protons.

The first and second electrodes may be configured to form a junction with one another at an interface therebetween. The electrolyte may be in contact with the junction of the first and second electrodes.

The apparatus is configured to allow one or both of the first electrode and electrolyte to be exposed to water in the surrounding environment.

The second electrode may comprise one or more of graphene oxide, reduced graphene oxide, potassium hydroxide, poly(3,4-ethylenedioxythiophene) polystyrene sulfonate, a base, and a conducting polymer.

The first and second electrodes may comprise first and second respective graphene oxide inks. The pH of the first graphene oxide ink may be lower than the pH of the second graphene oxide ink. The first graphene oxide ink may have a pH of 1-4 and the second graphene oxide ink may have a pH of 13-14.

The room-temperature ionic fluid may comprise one or more of a room-temperature ionic liquid and an ionic gel. The room-temperature ionic fluid may be a liquid or gel at least within one or more of the following temperature ranges: -100°C to +100°C; -50°C to +50°C; +15°C to +35°C; and +20°C to +27°C.

The room-temperature ionic fluid may comprise one or more of triethylsulfonium bis(trifluoromethylsulfonyl)imide, 1-buthyl-3-methyl-imidazolium, and trioctylmethylammonium bis(trifluoromethylsulfonyl)imide.

The electrolyte may further comprise one or more salts configured to aid the flow of protons from the first electrode to the second electrode and/or enhance the adsorption of water by the room-temperature ionic fluid from the surrounding environment. The one or more salts may comprise at least one of lithium bis(trifluoromethylsulfonyl)imide, lithium chloride and sodium chloride.

The room-temperature ionic fluid is hydrophilic and ionically conductive.

The room-temperature ionic fluid may comprise cations and anions. The cations may be substantially larger in size than the anions.

The apparatus may comprise a respective charge collector in contact with the first and second electrodes configured to provide an electrical path between the respective electrode and the external circuit. One or both of the respective charge collectors may comprise at least one of a metal, an alloy, gold, silver, copper, aluminium, steel, and indium tin oxide.

The apparatus may comprise a substrate configured to support the first and second electrodes.

The apparatus may be one or more of a battery, a capacitor, a supercapacitor, a battery-capacitor hybrid, an electronic device, a portable electronic device, a portable telecommunications device, a mobile phone, a personal digital assistant, a phablet, a tablet, a laptop computer, an electronic watch, a wireless sensor, an electrochemical sensor, a wearable device, an RFID tag, an electrochromic device, and a module for one or more of the same.

According to a further aspect, there is provided a method of making an apparatus comprising a first electrode, a second electrode and an electrolyte, the method comprising:
forming first and second electrodes, the first electrode comprising graphene oxide and configured to generate protons in the presence of water to produce a potential difference between the first and second electrodes; and
providing an electrolyte to enable the generated protons to flow from the first electrode to the second electrode when the first and second electrodes are connected by an external circuit, the electrolyte comprising a room-temperature ionic fluid configured to absorb water from the surrounding environment and deliver said water to the first electrode to facilitate the generation of protons.

One or both of forming the first and second electrodes and providing the electrolyte may comprise printing the electrodes/electrolyte.

According to a further aspect, there is provided a method of producing a potential difference using an apparatus, the apparatus comprising a first electrode, a second electrode and an electrolyte,
the first electrode comprising graphene oxide and configured to generate protons in the presence of water to produce a potential difference between the first and second electrodes,
the electrolyte configured to enable the generated protons to flow from the first electrode to the second electrode when the first and second electrodes are connected by an external circuit,
wherein the electrolyte comprises a room-temperature ionic fluid configured to absorb water from the surrounding environment and deliver said water to the first electrode to facilitate the generation of protons, the method comprising:
   exposing the electrolyte to water in the surrounding environment to facilitate the generation of protons by the first electrode and the production of a corresponding potential difference between the first and second electrodes.

The steps of any method disclosed herein do not have to be performed in the exact order disclosed, unless explicitly stated or understood by the skilled person.

Corresponding computer programs (which may or may not be recorded on a carrier) for implementing one or more of the methods disclosed herein are also within the present disclosure and encompassed by one or more of the described example embodiments.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

A description is now given, by way of example only, with reference to the accompanying drawings, in which:-
Figure 1a illustrates an existing proton battery in plan view;
Figure 1b illustrates the proton battery of Figure 1 a in cross-section;
Figure 1c illustrates schematically discharge curves for the proton battery of Figure 1a at various different discharge currents;
Figure 2 illustrates schematically one example of an apparatus according to the present disclosure;
Figure 3 illustrates schematically discharge curves for the apparatus of Figure 1 having various different junction areas;
Figure 4 illustrates schematically the discharge curve for an apparatus comprising two stacked junctions;
Figure 5 illustrates schematically another example of an apparatus according to the present disclosure;
Figure 6 illustrates schematically a method of making the apparatus of Figure 1;
Figure 7 illustrates schematically a method of using the apparatus of Figure 1; and
Figure 8 shows a computer-readable medium comprising a computer program configured to perform, control or enable one or more of the method steps of Figure 6 or 7.

### Description of Specific Aspects/Embodiments

Electrical energy storage is an important consideration for portable electronic devices. Proton batteries are currently being developed for this purpose. The energy generation mechanism of one type of proton battery involves the degradation of graphene oxide when in contact with water. The water may be contained within the battery or it may come from the surrounding environment (e.g. in the form of air humidity).

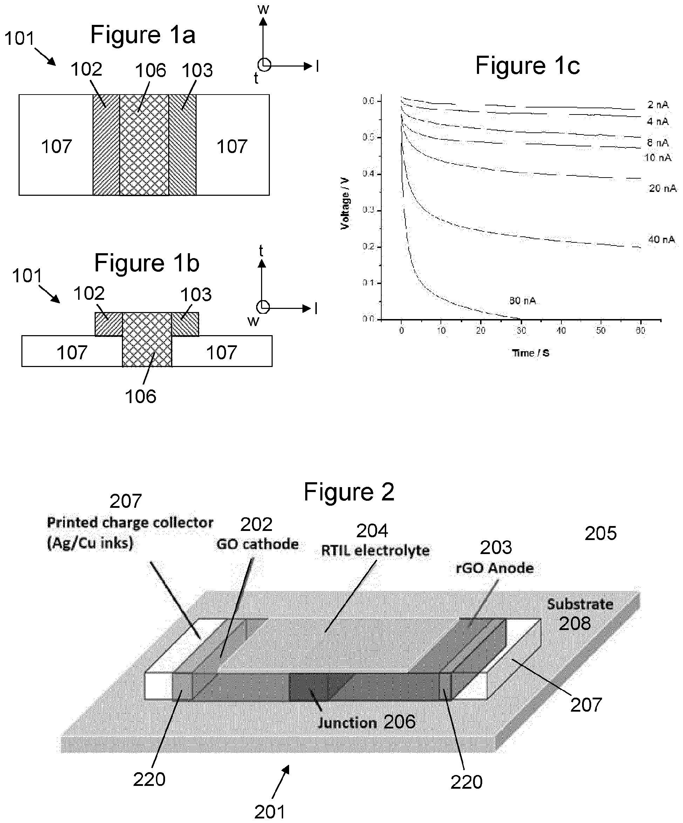

Figures 1 a and 1b show an existing graphene oxide-based proton battery 101 in plan view and cross-section, respectively. The battery 101 comprises a first electrode 102 formed from graphene oxide and a second electrode 103 formed from reduced graphene oxide. The first 102 and second 103 electrodes are deposited such that they (at least partly) overlie respective silver charge collectors 107 and form a junction 106 with one another at an interface therebetween (e.g. where the electrode materials intermix and/or overlie one another). In this example, the charge collectors 107 each have a length (I) and width (w) of 5mm, a thickness (t) of 1µm, and are separated from one another by 2mm. The in-plane junction area (i.e. l x w) is therefore 10mm². A number of charge/discharge cycles were performed to test the electrical properties of the existing graphene oxide-based proton battery 101. The battery 101 was found to exhibit a storage capacity of up to 100nAh and a maximum open circuit voltage of 0.6V at 30% humidity, and could be discharged with currents of between 2nA and 80nA.

Figure 1c shows the discharge curves produced for the various discharge currents. There will now be described an apparatus and associated methods that may be able to provide a greater electrical output than the existing proton battery 101.

Figure 2 shows one example of the present apparatus 201, which may be one or more of a primary or secondary battery, a capacitor, a supercapacitor, a battery-capacitor hybrid, and a module for one or more of the same depending on the specific electrochemistry of the apparatus 201. The apparatus 201 comprises a first electrode 202, a second electrode 203 and an electrolyte 204. The first electrode 202 comprises graphene oxide and is configured to generate protons in the presence of water to produce a potential difference between the first 202 and second 203 electrodes. The electrolyte 204 is configured to enable the generated protons to flow from the first electrode 202 to the second electrode 203 when the first 202 and second 203 electrodes are connected by an external circuit (not shown), e.g. during use of the potential difference.

Importantly, the electrolyte 204 comprises a room-temperature ionic fluid configured to absorb water from the surrounding environment 205 and deliver said water to the first electrode 202 to facilitate the generation of protons. This feature has been found to boost both the storage capacity and output voltage of the apparatus 201, and also allows the apparatus 201 to be discharged at higher currents (discussed in more detail later). Furthermore, in some embodiments (e.g. secondary battery, capacitor, supercapacitor or battery-capacitor hybrid) the presence of the room-temperature ionic fluid enables the apparatus 201 to be recharged within a few minutes after being fully discharged without the application of external energy. This is due to the chemical reactions between the graphene oxide of the first electrode 202 and the water from the external environment 205 which generate protons and give rise to the potential difference. In these embodiments, the apparatus 201 may therefore be recharged provided that (i) there is water present, and (ii) the graphene oxide has not been completely consumed during the previous charge cycles. In other embodiments (e.g. primary batteries), however, the apparatus 201 may not be rechargeable.

In the example shown in Figure 2, the first 202 and second 203 electrodes are configured to form a junction 206 with one another at an interface therebetween (e.g. where the electrode materials intermix and/or overlie one another), and the electrolyte 204 is in contact with the junction 206 of the first 202 and second 203 electrodes. This configuration can be produced using a relatively simple printing process. Furthermore, the contact between the electrolyte 204 and the electrode junction 206 helps to ensure that the generated protons are able flow between the first 202 and second 203 electrodes.

The apparatus 201 is configured to allow one or both of the first electrode 202 and electrolyte 204 to be exposed to water in the surrounding environment 205. In practice, this could be achieved (for example) by leaving the apparatus 201 uncovered/unsealed, containing the apparatus 201 within a water and/or air-permeable material if a protective casing is required, or by providing a casing for the apparatus 201 with one or more portions which are configured to be opened and closed. The ability to expose the electrolyte 204 to water in the surrounding environment 205 is necessary in order to benefit from the enhanced electrical properties of the present apparatus 201, because the water can be considered to fuel the generation of protons. In some cases, the apparatus 201 may also comprise a water source so that protons (and therefore a potential difference) can be produced even when the humidity of the surrounding environment 205 is relatively low. For example, the apparatus 201 may comprise a water-absorbing material (such as sponge) in fluid-communication with the first electrode 202 and/or electrolyte 204 for this purpose.

In the example shown in Figure 2, the apparatus 201 also comprises a respective charge collector 207 in contact with the first 202 and second 203 electrodes configured to provide an electrical path between the respective electrode 202, 203 and the external circuit (not shown). One or both of these charge collectors 207 may comprise at least one of a metal, an alloy, gold, silver, copper, aluminium, steel, and indium tin oxide. Figure 2 also shows regions of overlap 220 between the charge collectors 207 and their associated electrodes 202, 203. Such regions 220 may be produced, for example, if the electrode 202, 203 and/or charge collector 207 materials are deposited using a printing process.

In addition, the apparatus 201 further comprises a substrate 208 configured to support the electrodes 202, 203, electrolyte 204 and charge collectors 207. The supporting substrate 208 is particularly useful when the various components are formed using a printing process, because printable materials (e.g. inks, liquids and gels) tend not to be self-supporting, at least until they have been dried or cured.

As mentioned above, the first electrode 202 comprises graphene oxide which reacts with the water to generate protons. In the illustrated example, the second electrode 203 comprises reduced graphene oxide, but it could comprise one or more of graphene oxide, reduced graphene oxide, potassium hydroxide, poly(3,4-ethylenedioxythiophene) polystyrene sulfonate (PEDOT:PSS), a base, and a conducting polymer. In some examples, the first 202 and second 203 electrodes may be formed from first and second respective graphene oxide inks. In this scenario, the first graphene oxide ink would typically have a lower pH (e.g. a pH of 1-4) than the second graphene oxide ink (e.g. a pH of 13-14). The pH difference of the inks is advantageous because it encourages the transfer of protons from the first electrode 202 to the second electrode 203 via an acid-base reaction at the junction 206 of the electrodes 202, 203.

The room-temperature ionic fluid of the electrolyte 204 may be a liquid or gel at room temperature (+20°C to +27°C). To achieve this, the fluid may comprise cations and anions wherein the cations are substantially larger in size than the anions (e.g. having a radius which is up to 2, 3, 4, 5 or 10 times larger than that of the anions). The difference in size between the cations and anions can prevent the fluid from forming a lattice at room temperature thus enabling the electrolyte 204 to maintain its fluid state. In some cases, the room-temperature ionic fluid may also be a liquid or gel at temperatures outside of the above "room temperature" range. For example, it may be a liquid or gel at temperatures of -100°C to +100°C, -50°C to +50°C, and/or +15°C to +35°C. Advantageously, the room-temperature ionic fluid would be in its liquid or gel form at all operating temperatures of the apparatus to help ensure its proton conductivity.

The electrolyte 204 comprises any room-temperature ionic fluids which are hydrophilic and ionically conductive. The room-temperature ionic fluid may comprise one or more of a room-temperature ionic liquid and an ionic gel. Suitable examples include triethylsulfonium bis(trifluoromethylsulfonyl)imide ([SET3][TFSI]), 1-buthyl-3-methyl-imidazolium ([BMIM][CI]), and trioctylmethylammonium bis(trifluoromethylsulfonyl)imide ([OMA][TFSI]). The electrolyte 204 may further comprise one or more salts configured to aid the flow of protons from the first electrode 202 to the second electrode 203 and/or enhance the absorption of water by the room-temperature ionic fluid from the surrounding environment 205. The addition of the one or more salts therefore facilitates the generation and conduction of protons further thereby allowing even more electrical energy to be produced by the apparatus 201. Suitable salts include lithium bis(trifluoromethylsulfonyl)imide ([Li][TFSI]), lithium chloride and sodium chloride.

The present apparatus 201 has been found to exhibit a larger storage capacity and output voltage than existing proton batteries, and can be discharged at higher currents. This can be attributed at least partly to the presence of the room-temperature ionic fluid of the electrolyte 204. A number of experiments were performed to test the electrical properties of the apparatus 201. These experiments were performed using the configuration of Figure 2 with graphene oxide (GO) for the first electrode 202, reduced graphene oxide (rGO) for the second electrode 203, [SET3][TFSI] for the room-temperature ionic fluid, and silver for the charge collector 207 at each electrode 202, 203. In addition, the in-plane area of the GO/rGO junction 206 was measured to be ∼10mm² (as per the existing proton battery shown in Figures 1 a and 1b), which was completely covered by the electrolyte 204. Throughout these experiments, the humidity of the surrounding environment 205 (i.e. the ambient humidity) was measured to be around 30%.

Once the room-temperature ionic fluid was applied to the apparatus 201, the open-circuit voltage increased from about 0.6V to about 1V, and the storage capacity increased from about 100nAh (at a discharge current of 2nA) to about 340nAh (at a discharge current of 100nA). The area of the GO/rGO junction 206 was then varied from ∼10mm² to ∼30mm² and then to ∼50mm² to determine how a larger active region would affect the electrical properties of the apparatus 201.

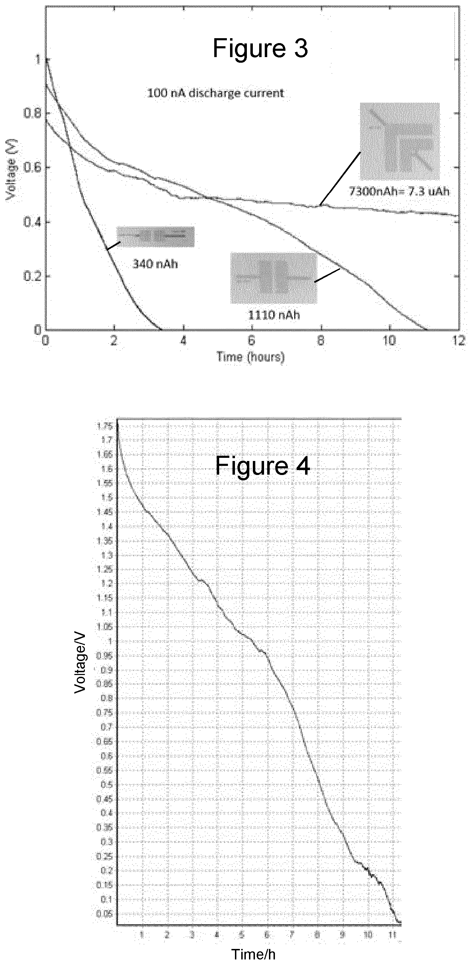

Figure 3 shows the discharge curves for the various different junction areas. By increasing the junction area from ∼10mm² to ∼30mm², the storage capacity increased from 340nAh to 1110nAh (at a discharge current of 100nA). By increasing the junction area further to ∼50mm², the storage capacity increased to 7300nAh (at a discharge current of 100nA). Increasing the junction area also allowed the use of even higher discharge currents. In fact, the largest junction tested (∼50mm²) was found to be suitable for use with discharge currents of up to 1µA.

In an attempt to increase the output voltage of the apparatus, two devices were then connected in series to form a stack comprising two GO/rGO junctions with a junction area of ∼10mm². It was found that the open-circuit voltage was increased from 1V to 2.3V when the second cell/junction was added, and the storage capacity was increased from 340nAh (at a discharge current of 100nA) to 12µAh (at a discharge current of 1µA).

Figure 4 shows the discharge curve for the above-mentioned stack at a discharge current of 1µA. As can be seen from this graph, the initial output voltage of ∼1.8V (less than the 2.3V open-circuit voltage due to the internal resistance of the apparatus) dropped to zero after about 11 hours of use. The results shown in Figures 3 and 4 illustrate that the electrical output of the present apparatus can be scaled up substantially with relatively small increases in the active (junction) area and number of cells (junctions).

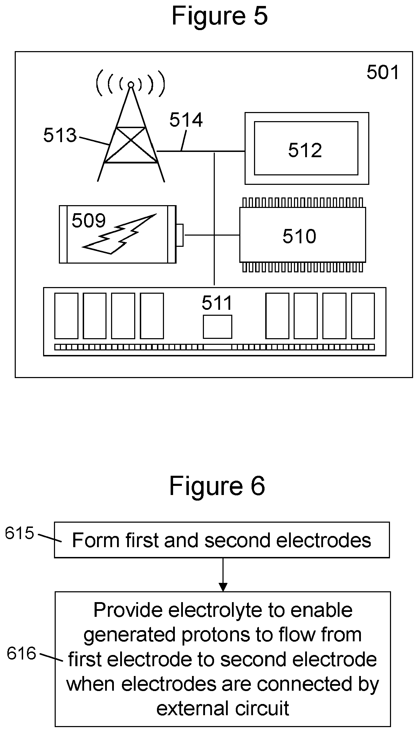

Figure 5 shows another example of the present apparatus 501. In this example, the apparatus comprises some or all of the components described herein (shown in Figure 5 as an electrical storage device 509), a processor 510, a storage medium 511, an electronic display 512 and a transceiver 513, which are electrically connected to one another by a data bus 514. The apparatus 501 may be one or more of an electronic device, a portable electronic device, a portable telecommunications device, a mobile phone, a personal digital assistant, a phablet, a tablet, a laptop computer, an electronic watch, a wireless sensor, an electrochemical sensor, a wearable device, an RFID tag, an electrochromic device, and a module for one or more of the same.

The electrical storage device 509 is configured to provide electrical power to the other components to enable their functionality. In this respect, the other components may be considered to be the external circuit referred to previously. The electronic display 512 is configured to display content stored on the apparatus 501 (e.g. stored on the storage medium 511), and the transceiver 513 is configured to transmit and/or receive data to/from one or more other devices via a wired or wireless connection.

The processor 510 is configured for general operation of the apparatus 501 by providing signalling to, and receiving signalling from, the other components to manage their operation. The storage medium 511 is configured to store computer code configured to perform, control or enable operation of the apparatus 501. The storage medium 511 may also be configured to store settings for the other components. The processor 510 may access the storage medium 511 to retrieve the component settings in order to manage the operation of the other components.

The processor 510 may be a microprocessor, including an Application Specific Integrated Circuit (ASIC). The storage medium 511 may be a temporary storage medium such as a volatile random access memory. On the other hand, the storage medium 511 may be a permanent storage medium such as a hard disk drive, a flash memory, or a non-volatile random access memory.

Figure 6 shows the main steps 615-616 of a method of making the apparatus described herein. The method generally comprises: forming first and second electrodes 615; and providing an electrolyte to enable the generated protons to flow from the first electrode to the second electrode when the first and second electrodes are connected by an external circuit (e.g. during use of the potential difference) 616. These steps 615, 616 may be performed using a variety of different fabrication processes. Advantageously, the electrodes (with or without charge collectors) and electrolyte may be printed, e.g. using inkjet printing. In this scenario, care should be taken when printing the electrolyte so that the electrolyte is not in contact with both of the charge collectors, otherwise it could short-circuit the apparatus.

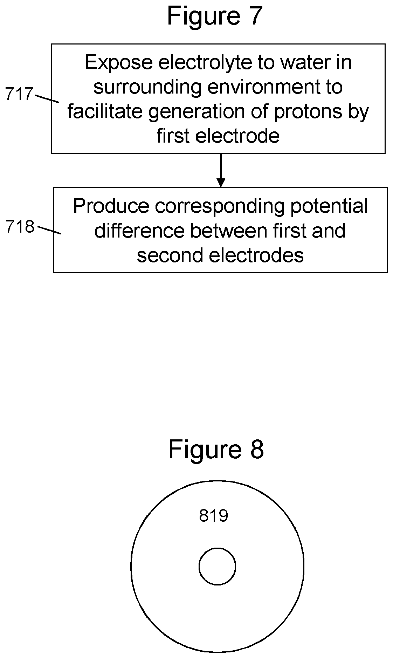

Figure 7 shows the main steps 717-718 of a method of producing a potential difference using the apparatus described herein. The method generally comprises: exposing the electrolyte to water in the surrounding environment to facilitate the generation of protons by the first electrode 717; and producing a corresponding potential difference between the first and second electrodes 718. The electrolyte may be exposed to water by placing the apparatus within a humid environment (e.g. having an ambient humidity of at least 10%, 20%, 30%, 50% or 75%) or by placing the apparatus within a container of water. In order to prevent the apparatus from being short-circuited or damaged by the water, the apparatus may comprise a waterproof coating or casing to prevent unwanted connections from being formed between the charge collectors and/or between the various electronic circuitry components or traces.

Figure 8 illustrates schematically a computer/processor readable medium 819 providing a computer program according to one embodiment. The computer program may comprise computer code configured to perform, control or enable one or more of the method steps 615-616 of Figure 6 and/or one or more of the method steps 717-718 of Figure 7. In this example, the computer/processor readable medium 819 is a disc such as a digital versatile disc (DVD) or a compact disc (CD). In other embodiments, the computer/processor readable medium 819 may be any medium that has been programmed in such a way as to carry out an inventive function. The computer/processor readable medium 819 may be a removable memory device such as a memory stick or memory card (SD, mini SD, micro SD or nano SD).

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

## Claims

1. An apparatus (201) comprising a first electrode (202), a second electrode (203) and an electrolyte (204),
the first electrode (202) comprising graphene oxide and configured to generate protons in the presence of water to produce a potential difference between the first (202) and second (203) electrodes,
the electrolyte (204) configured to enable the generated protons to flow from the first electrode (202) to the second electrode (203) when the first (202) and second (203) electrodes are connected by an external circuit,
wherein the electrolyte (204) comprises a hydrophilic and ionically conductive room-temperature ionic fluid configured to absorb water from the surrounding environment (205) and deliver said water to the first electrode (202) to facilitate the generation of protons, and
wherein the apparatus (201) is configured to allow one or both of the first electrode (202) and electrolyte (204) to be exposed to water in the surrounding environment (205).

2. The apparatus (201) of claim 1, wherein the first (202) and second (203) electrodes are configured to form a junction (206) with one another at an interface therebetween, and wherein the electrolyte (204) is in contact with the junction (206) of the first (202) and second (203) electrodes.

3. The apparatus (201) of claim 1 or 2, wherein the apparatus (201) is configured to allow one or both of the first electrode (202) and electrolyte (204) to be exposed to water in the surrounding environment (205) by one of:
being uncovered or unsealed;
being contained within a water and/or air-permeable material; and
comprising a casing with one or more portions which are configured to be opened and closed.

4. The apparatus (201) of any preceding claim, wherein the second electrode (203) comprises one or more of graphene oxide, reduced graphene oxide, potassium hydroxide, poly(3,4-ethylenedioxythiophene) polystyrene sulfonate, a base, and a conducting polymer.

5. The apparatus (201) of any preceding claim, wherein the first (202) and second (203) electrodes comprise first and second respective graphene oxide inks, and wherein the initial pH of the first graphene oxide ink is lower than the initial pH of the second graphene oxide ink.

6. The apparatus (201) of claim 5, wherein the first graphene oxide ink has an initial pH of 1-4 and the second graphene oxide ink has an initial pH of 13-14.

7. The apparatus (201) of any preceding claim, wherein the room-temperature ionic fluid is a liquid or gel at least within one or more of the following temperature ranges: -100°C to +100°C; -50°C to +50°C; +15°C to +35°C; and +20°C to +27°C.

8. The apparatus (201) of any preceding claim, wherein the room-temperature ionic fluid comprises one or more of triethylsulfonium bis(trifluoromethylsulfonyl)imide, 1-buthyl-3-methyl-imidazolium, and trioctylmethylammonium bis(trifluoromethylsulfonyl)imide.

9. The apparatus (201) of any preceding claim, wherein the electrolyte (204) further comprises one or more salts configured to aid the flow of protons from the first electrode (202) to the second electrode (203) and/or enhance the adsorption of water by the room-temperature ionic fluid from the surrounding environment (205).

10. The apparatus (201) of any preceding claim, wherein the room-temperature ionic fluid comprises cations and anions, and wherein the cations are substantially larger in size than the anions.

11. The apparatus (201) of any preceding claim, wherein the apparatus (201) comprises a respective charge collector (207) in contact with the first (202) and second (203) electrodes configured to provide an electrical path between the respective electrode (202, 203) and the external circuit.

12. The apparatus (201) of any preceding claim, wherein the apparatus (201) is one or more of a battery (509), a capacitor, a supercapacitor, a battery-capacitor hybrid, an electronic device (501), a portable electronic device, a portable telecommunications device, a mobile phone, a personal digital assistant, a phablet, a tablet, a laptop computer, an electronic watch, a wireless sensor, an electrochemical sensor, a wearable device, an RFID tag, an electrochromic device, and a module for one or more of the same.

13. A method of making an apparatus (201) comprising a first electrode (202), a second electrode (203) and an electrolyte (204), the method comprising:
forming (615) first (202) and second (203) electrodes, the first electrode (202) comprising graphene oxide and configured to generate protons in the presence of water to produce a potential difference between the first (202) and second (203) electrodes;
providing (616) an electrolyte (204) to enable the generated protons to flow from the first electrode (202) to the second electrode (203) when the first (202) and second (203) electrodes are connected by an external circuit, the electrolyte (204) comprising a hydrophilic and ionically conductive room-temperature ionic fluid configured to absorb water from the surrounding environment (205) and deliver said water to the first electrode (202) to facilitate the generation of protons; and
configuring the apparatus (201) to allow one or both of the first electrode (202) and electrolyte (204) to be exposed to water in the surrounding environment (205).

14. A method of producing a potential difference using an apparatus (201), the apparatus (201) comprising a first electrode (202), a second electrode (203) and an electrolyte (204),
the first electrode (202) comprising graphene oxide and configured to generate protons in the presence of water to produce a potential difference between the first (202) and second (203) electrodes,
the electrolyte (204) configured to enable the generated protons to flow from the first electrode (202) to the second electrode (203) when the first (202) and second (203) electrodes are connected by an external circuit,
wherein the electrolyte (204) comprises a hydrophilic and ionically conductive room-temperature ionic fluid configured to absorb water from the surrounding environment (205) and deliver said water to the first electrode (202) to facilitate the generation of protons, and
wherein the apparatus (201) is configured to allow one or both of the first electrode (202) and electrolyte (204) to be exposed to water in the surrounding environment (205), the method comprising:
exposing (717) one or both of the first electrode (202) and electrolyte (204) to water in the surrounding environment (205) to facilitate the generation of protons by the first electrode (202) and the production (718) of a corresponding potential difference between the first (202) and second (203) electrodes.

## Patentansprüche

1. Vorrichtung (201), umfassend eine erste Elektrode (202), eine zweite Elektrode (203) und einen Elektrolyten (204),
wobei die erste Elektrode (202) Graphenoxid umfasst und dafür gestaltet ist, Protonen in Gegenwart von Wasser zu erzeugen, um einen Potentialunterschied zwischen der ersten (202) und der zweiten (203) Elektrode zu erzeugen,
wobei der Elektrolyt (204) dafür gestaltet ist, den erzeugten Protonen zu ermöglichen, von der ersten Elektrode (202) zu der zweiten Elektrode (203) zu fließen, wenn die erste (202) und die zweite (203) Elektrode durch eine externe Schaltung verbunden sind,
wobei der Elektrolyt (204) eine hydrophiles und ionenleitfähiges Raumtemperatur-ionisches Fluid umfasst, das dafür gestaltet ist, Wasser aus der umgebenden Umgebung (205) zu absorbieren und das Wasser der ersten Elektrode (202) zuzuführen, um die Erzeugung von Protonen zu ermöglichen, und
wobei die Vorrichtung (201) dafür gestaltet ist, zu ermöglichen, dass eines oder beide von der ersten Elektrode (202) und dem Elektrolyten (204) gegenüber Wasser in der umgebenden Umgebung (205) exponiert wird.

2. Vorrichtung gemäß (201) gemäß Anspruch 1, wobei die erste (202) und die zweite (203) Elektrode dafür gestaltet sind, eine Verbindung (206) miteinander an einer dazwischenliegenden Grenzfläche zu bilden, und wobei der Elektrolyt (204) in Kontakt mit der Verbindung (206) der ersten (202) und der zweiten (203) Elektrode steht.

3. Vorrichtung (201) gemäß Anspruch 1 oder 2, wobei die Vorrichtung (201) dafür gestaltet ist, zu ermöglichen, dass eines oder beide von der ersten Elektrode (202) und dem Elektrolyten (204) gegenüber Wasser in der umgebenden Umgebung (205) exponiert wird durch eines von:
unbedeckt oder unabgedichtet zu sein;
innerhalb eines wasser- und/oder luftdurchlässigen Materials enthalten zu sein; und
eine Hülle mit einem oder mehreren Abschnitten zu umfassen, die dafür gestaltet sind, geöffnet und geschlossen zu werden.

4. Vorrichtung (201) gemäß einem der vorstehenden Ansprüche, wobei die zweite Elektrode (203) eines oder mehrere von Graphenoxid, reduziertem Graphenoxid, Kaliumhydroxid, Poly(3,4-ethylendioxythiophen)polystyrolsulfonat, einer Base und einem leitfähigen Polymer umfasst.

5. Vorrichtung (201) gemäß einem der vorstehenden Ansprüche, wobei die erste (202) und die zweite (203) Elektrode entsprechende erste und zweite Graphenoxidtinten umfassen, wobei der Anfangs-pH-Wert der ersten Graphenoxidtinte kleiner als der Anfangs-pH-Wert der zweiten Graphenoxidtinte ist.

6. Vorrichtung (201) gemäß Anspruch 5, wobei die erste Graphenoxidtinte einen Anfangs-pH-Wert von 1-4 aufweist und die zweite Graphenoxidtinte einen Anfangs-pH-Wert von 13-14 aufweist.

7. Vorrichtung (201) gemäß einem der vorstehenden Ansprüche, wobei das Raumtemperatur-ionische Fluid eine Flüssigkeit oder ein Gel wenigstens innerhalb eines oder mehrerer der folgenden Temperaturbereiche ist: -100 °C bis +100 °C; -50 °C bis +50 °C; +15 °C bis +35 °C; und +20 °C bis +27 °C.

8. Vorrichtung (201) gemäß einem der vorstehenden Ansprüche, wobei das Raumtemperatur-ionische Fluid eines oder mehrere von Triethylsulfoniumbis(trifluormethylsulfonyl)imid, 1-Butyl-3-methylimidazolium und Trioctylmethylammoniumbis(trifluormethylsulfonyl)-imid umfasst.

9. Vorrichtung (201) gemäß einem der vorstehenden Ansprüche, wobei der Elektrolyt (204) ferner ein oder mehrere Salze umfasst, die dafür gestaltet sind, den Fluss von Protonen von der ersten Elektrode (202) zu der zweiten Elektrode (203) zu unterstützen und/oder die Adsorption von Wasser durch das Raumtemperatur-ionische Fluid aus der umgebenden Umgebung (205) zu verstärken.

10. Vorrichtung (201) gemäß einem der vorstehenden Ansprüche, wobei das Raumtemperatur-ionische Fluid Kationen und Anionen umfasst und wobei die Kationen eine wesentlich größere Größe als die Anionen aufweisen.

11. Vorrichtung (201) gemäß einem der vorstehenden Ansprüche, wobei die Vorrichtung (201) einen entsprechenden Ladungsabnehmer (207) in Kontakt mit der ersten (202) und zweiten (203) Elektrode umfasst, der dafür gestaltet ist, einen elektrischen Weg zwischen der entsprechenden Elektrode (202, 203) und der externen Schaltung bereitzustellen.

12. Vorrichtung (201) gemäß einem der vorstehenden Ansprüche, wobei die Vorrichtung (201) eines oder mehrere von einer Batterie (509), einem Kondensator, einem Superkondensator, einem Batterie-Kondensator-Hybrid, einer elektronischen Vorrichtung (501), einer tragbaren elektronischen Vorrichtung, einer tragbaren Telekommunikationsvorrichtung, einem Mobiltelephon, einem Personal Digital Assistant, einem Phablet, einem Tablet, einem Laptop-Computer, einer elektronischen Uhr, einem drahtlosen Sensor, einem elektrochemischen Sensor, ein tragbaren Vorrichtung, einem RFID-Tag, einer elektrochromen Vorrichtung und einem Modul für eines oder mehrere von diesen ist.

13. Verfahren zum Herstellen einer Vorrichtung (201), die eine erste Elektrode (202), eine zweite Elektrode (203) und einen Elektrolyten (204) umfasst, wobei das Verfahren umfasst:
Bilden (615) einer ersten (202) und einer zweiten (203) Elektrode, wobei die erste Elektrode (202) Graphenoxid umfasst und dafür gestaltet ist, Protonen in Gegenwart von Wasser zu erzeugen, um einen Potentialunterschied zwischen der ersten (202) und der zweiten (203) Elektrode zu erzeugen;
Bereitstellen (616) eines Elektrolyten (204), um den erzeugten Protonen zu ermöglichen, von der ersten Elektrode (202) zu der zweiten Elektrode (203) zu fließen, wenn die erste (202) und die zweite (203) Elektrode durch eine externe Schaltung verbunden sind, wobei der Elektrolyt (204) eine hydrophiles und ionenleitfähiges Raumtemperatur-ionisches Fluid umfasst, das dafür gestaltet ist, Wasser aus der umgebenden Umgebung (205) zu absorbieren und das Wasser der ersten Elektrode (202) zuzuführen, um die Erzeugung von Protonen zu ermöglichen; und
Gestalten der Vorrichtung (201), um zu ermöglichen, dass eines oder beide von der ersten Elektrode (202) und dem Elektrolyten (204) gegenüber Wasser in der umgebenden Umgebung (205) exponiert wird.

14. Verfahren zum Erzeugen eines Potentialunterschieds unter Verwendung einer Vorrichtung (201), wobei die Vorrichtung (201) eine erste Elektrode (202), eine zweite Elektrode (203) und einen Elektrolyten (204) umfasst,
wobei die erste Elektrode (202) Graphenoxid umfasst und dafür gestaltet ist, Protonen in Gegenwart von Wasser zu erzeugen, um einen Potentialunterschied zwischen der ersten (202) und der zweiten (203) Elektrode zu erzeugen,
wobei der Elektrolyt (204) dafür gestaltet ist, den erzeugten Protonen zu ermöglichen, von der ersten Elektrode (202) zu der zweiten Elektrode (203) zu fließen, wenn die erste (202) und die zweite (203) Elektrode durch eine externe Schaltung verbunden sind,
wobei der Elektrolyt (204) eine hydrophiles und ionenleitfähiges Raumtemperatur-ionisches Fluid umfasst, das dafür gestaltet ist, Wasser aus der umgebenden Umgebung (205) zu absorbieren und das Wasser der ersten Elektrode (202) zuzuführen, um die Erzeugung von Protonen zu ermöglichen, und
wobei die Vorrichtung (201) dafür gestaltet ist, zu ermöglichen, dass eines oder beide von der ersten Elektrode (202) und dem Elektrolyten (204) gegenüber Wasser in der umgebenden Umgebung (205) exponiert wird, wobei das Verfahren umfasst:
Exponieren (717) von einem oder beiden von der ersten Elektrode (202) und dem Elektrolyten (204) gegenüber Wasser in der umgebenden Umgebung (205), um die Erzeugung von Protonen durch die erste Elektrode (202) und das Erzeugen (718) eines entsprechenden Potentialunterschieds zwischen der ersten (202) und der zweiten (203) Elektrode zu ermöglichen.

## Revendications

1. Appareil (201) comprenant une première électrode (202), une seconde électrode (203) et un électrolyte (204),
la première électrode (202) comprenant de l'oxyde de graphène et étant configurée pour générer des protons en présence d'eau afin de produire une différence de potentiel entre les première (202) et seconde (203) électrodes,
l'électrolyte (204) étant configuré pour permettre aux protons générés de s'écouler depuis la première électrode (202) jusqu'à la seconde électrode (203) lorsque les première (202) et seconde (203) électrodes sont raccordées par un circuit externe,
dans lequel l'électrolyte (204) comprend un fluide ionique hydrophile et ioniquement conducteur à température ambiante configuré pour absorber l'eau de l'environnement proche (205) et distribuer ladite eau à la première électrode (202) pour faciliter la génération de protons et
dans lequel l'appareil (201) est configuré pour permettre à la première électrode (202) et/ou à l'électrolyte (204) d'être exposés à de l'eau dans l'environnement proche (205).

2. Appareil (201) selon la revendication 1, dans lequel les première (202) et seconde (203) électrodes sont configurées pour former une jonction (206) l'une avec l'autre au niveau d'une interface entre ces dernières et dans lequel l'électrolyte (204) est en contact avec la jonction (206) des première (202) et seconde (203) électrodes.

3. Appareil (201) selon la revendication 1 ou 2, dans lequel l'appareil (201) est configuré pour permettre à la première électrode (202) et/ou à l'électrolyte (204) d'être exposés à de l'eau dans l'environnement proche (205) :
soit en étant non couverts ou non scellés ;
soit en étant contenus dans de l'eau et/ou un matériau perméable à l'air ; et
soit en comprenant un boîtier ayant une ou plusieurs parties configurées pour être ouvertes et fermées.

4. Appareil (201) selon l'une quelconque des revendications précédentes, dans lequel la seconde électrode (203) comprend de l'oxyde de graphène et/ou de l'oxyde de graphène réduit et/ou de l'hydroxyde de potassium et/ou le poly(3,4-éthylènedioxythiophène) polystyrène sulphonate et/ou une base et/ou un polymère conducteur.

5. Appareil (201) selon l'une quelconque des revendications précédentes, dans lequel les première (202) et seconde (203) électrodes comprennent des première et seconde encres respectives à base d'oxyde de graphène et dans lequel le pH initial de la première encre à base d'oxyde de graphène est inférieur au pH initial de la seconde encre à base d'oxyde de graphène.

6. Appareil (201) selon la revendication 5, dans lequel la première encre à base d'oxyde de graphène présente un pH initial compris entre 1 et 4 et la seconde encre à base d'oxyde de graphène présente un pH initial compris entre 13 et 14.

7. Appareil (201) selon l'une quelconque des revendications précédentes, dans lequel le fluide ionique à température ambiante est un liquide ou un gel dans une ou plusieurs plages de température suivantes : de -100 °C à +100 °C ; de -50 °C à +50 °C ; de +15 °C à +35 °C ; et de +20 °C à +27 °C.

8. Appareil (201) selon l'une quelconque des revendications précédentes, dans lequel le fluide ionique à température ambiante comprend du triéthylsulfonium bis(trifluorométhylsulfonyl)imide et/ou du 1-butyl-3-méthyl-imidazolium et/ou du trioctylméthylammonium bis(trifluorométhylsulfonyl)imide.

9. Appareil (201) selon l'une quelconque des revendications précédentes, dans lequel l'électrolyte (204) comprend en outre un ou plusieurs sels configurés pour aider à l'écoulement des protons depuis la première électrode (202) jusqu'à la seconde électrode (203) et/ou pour améliorer l'adsorption de l'eau par le fluide ionique à température ambiante provenant de l'environnement proche (205).

10. Appareil (201) selon l'une quelconque des revendications précédentes, dans lequel le fluide ionique à température ambiante comprend des cations et des anions et dans lequel la taille des cations est sensiblement plus importante que celle des anions.

11. Appareil (201) selon l'une quelconque des revendications précédentes, dans lequel l'appareil (201) comprend un collecteur de charge respectif (207) en contact avec les première (202) et seconde (203) électrodes configuré pour fournir un trajet électrique entre les électrodes respectives (202, 203) et le circuit externe.

12. Appareil (201) selon l'une quelconque des revendications précédentes, dans lequel l'appareil (201) est une batterie (509) et/ou un condensateur et/ou un supercondensateur et/ou une batterie-condensateur hybride et/ou un dispositif électronique (501) et/ou un dispositif électronique portable et/ou un dispositif de télécommunication portable et/ou un téléphone mobile et/ou un assistant électronique de poche et/ou une phablette et/ou une tablette et/ou un ordinateur portable et/ou une montre électronique et/ou un capteur sans fil et/ou un capteur électrochimique et/ou un dispositif portable et/ou une étiquette RFID et/ou un dispositif électrochromique et/ou un module pour un ou plusieurs de ces éléments.

13. Procédé de fabrication d'un appareil (201) comprenant une première électrode (202), une seconde électrode (203) et un électrolyte (204), le procédé consistant à :
former (615) des première (202) et seconde (203) électrodes, la première électrode (202) comprenant de l'oxyde de graphène et étant configurée pour générer des protons en présence d'eau afin de produire une différence de potentiel entre les première (202) et seconde (203) électrodes ;
fournir (616) un électrolyte (204) pour permettre aux protons générés de s'écouler depuis la première électrode (202) jusqu'à la seconde électrode (203) lorsque les première (202) et seconde (203) électrodes sont raccordées par un circuit externe, l'électrolyte (204) comprenant un fluide ionique hydrophile et ioniquement conducteur à température ambiante configuré pour absorber l'eau de l'environnement proche (205) et distribuer ladite eau à la première électrode (202) pour faciliter la génération de protons ; et
configurer l'appareil (201) pour permettre à la première électrode (202) et/ou à l'électrolyte (204) d'être exposés à de l'eau dans l'environnement proche (205).

14. Procédé de production d'une différence de potentiel à l'aide d'un appareil (201), l'appareil (201) comprenant une première électrode (202), une seconde électrode (203) et un électrolyte (204),
la première électrode (202) comprenant de l'oxyde de graphène et étant configurée pour générer des protons en présence d'eau afin de produire une différence de potentiel entre les première (202) et seconde (203) électrodes,
l'électrolyte (204) étant configuré pour permettre aux protons générés de s'écouler depuis la première électrode (202) jusqu'à la seconde électrode (203) lorsque les première (202) et seconde (203) électrodes sont raccordées par un circuit externe,
dans lequel l'électrolyte (204) comprend un fluide ionique hydrophile et ioniquement conducteur à température ambiante configuré pour absorber l'eau de l'environnement proche (205) et distribuer ladite eau à la première électrode (202) pour faciliter la génération de protons et
dans lequel l'appareil (201) est configuré pour permettre à la première électrode (202) et/ou à l'électrolyte (204) d'être exposés à de l'eau dans l'environnement proche (205), le procédé consistant à :
exposer (717) la première électrode (202) et/ou l'électrolyte (204) à de l'eau dans l'environnement proche (205) pour faciliter la génération de protons par la première électrode (202) et la production (718) d'une différence de potentiel correspondante entre les première (202) et seconde (203) électrodes.
